# EUROPÄISCHE PATENTSCHRIFT

(11) **EP 2 344 362 B1**
(45) Veröffentlichungstag und Bekanntmachung des Hinweises auf die Patenterteilung: **16.10.2019**
(21) Anmeldenummer: 09756236.7
(22) Anmeldetag: 02.11.2009
(51) Int. Cl.: G02B 27/09, G02B 6/00, B66F 9/08

(54) **LICHTLEITELEMENT FÜR EINE BELEUCHTUNGSEINRICHTUNG**
LIGHT GUIDE ELEMENT FOR A LIGHTING DEVICE
ÉLÉMENT DE GUIDAGE DE LUMIÈRE POUR DISPOSITIF D'ÉCLAIRAGE

(30) Priorität: 04.11.2008 AT 17182008
(43) Veröffentlichungstag der Anmeldung: 20.07.2011
(73) Patentinhaber: Gerg Lighthouse GmbH, 85625 Baiern/Piusheim (DE)
(72) Erfinder: CONZATTI, Günther, A-6176 Völs (AT); WEINGÄRTNER, Harald, A-6432 Sautens (AT); SWAROVSKI, Paul, A-6071 Aldrans (AT)
(74) Vertreter: Patentship Patentanwaltsgesellschaft mbH
(86) Internationale Anmeldenummer: PCT/AT2009/000422
(87) Internationale Veröffentlichungsnummer: WO 2010/051570

(56) Entgegenhaltungen:
- EP-A1- 0 584 545
- EP-A1- 1 701 199
- WO-A1-2004/052682
- WO-A1-2004/114418
- WO-A2-2006/126155
- DE-U1-202007 003 497
- FR-A1- 2 799 263
- FR-A1- 2 804 494
- KR-B1- 100 314 678
- US-A1- 2005 254 539
- US-A1- 2007 247 862

## Beschreibung

Die Erfindung betrifft ein Lichtleitelement für eine Beleuchtungseinrichtung, wobei das Lichtleitelement in Richtung einer Hauptachse langgestreckt ist und eine sich quer zur Längsrichtung erstreckende Lichteintrittsfläche und eine quer zur Längsrichtung abstrahlende Lichtaustrittsfläche aufweist, und zwei oder mehr übereinander angeordnete Lichtleiter aufweist.

Ein Beispiel eines derartigen Lichtleitelements ist in der DE 20 2007 003 497 U1 gezeigt.

Nachteilig ist bei diesem und anderen aus dem Stand der Technik bekannten Lichtleitelementen, dass das Licht inhomogen aus dem Lichtleitelement austritt, wobei eine präzise Grenze zwischen hellem, ausgeleuchtetem und dunklem, nicht ausgeleuchtetem Bereich, insbesondere gilt dies für die Leuchtdichteverteilung, trotz aller Bemühungen nicht realisierbar ist, sodass ein mit einem derartigen Lichtleitelement versehener Fahrzeugscheinwerfer entgegenkommende Fahrzeuglenker zwangsweise blendet.

Dabei ist in verschiedenen alltäglichen Bereichen des Lebens die Blendung von Personen, die in Richtung von Beleuchtungseinrichtungen blicken, ein großes Problem. Neben der im Straßenverkehr auftretenden Blendung betrifft diese Problematik ebenso Straßenbeleuchtungen, beispielsweise zur Ausleuchtung von Tunneln, Beleuchtung öffentlicher Plätze wie zB Sportplätze, Beleuchtung von Arbeitsplätzen oder Wohnorten, usw. So ist beispielsweise die Gefahr eines tödlichen Verkehrsunfalls in der Nacht mehr als doppelt so hoch wie am Tag, obwohl in der Nacht nur durchschnittlich ein Viertel aller Unfälle geschehen. Dabei stellt ein Hauptgrund für derartige im alltäglichen Leben unangenehme und im Straßenverkehr gefährliche Blendungen eine lediglich über die Beleuchtungsstärke definierte Hell/Dunkelgrenze des Leuchtbereichs der Beleuchtungseinrichtungen dar. Für die Blendwirkung relevanter ist allerdings die physiologische Helligkeitswirkung, gegeben durch die Leuchtdiode, welche in Einheiten von Candela pro Quadratmeter angegeben wird.

Um diese Hell-/Dunkelgrenze schärfer und präziser auszugestalten, gibt es im Stand der Technik bereits vielfältige Möglichkeiten zur Bündelung des aus der Lichtaustrittsfläche von Scheinwerfern austretenden Lichts. Neben den schon lange bekannten Methoden der Bündelung durch Reflektoren oder Spiegel, wird in jüngerer Zeit das Licht von einer oder mehreren Lichtquellen mittels eines speziell ausgebildeten Lichtleitelements zusätzlich gebündelt, wobei das Licht der Lichtquellen in einem Lichteinkoppelbereich in das Lichtleitelement eingekoppelt und dann beispielsweise mittels Brechung und/oder Totalreflexion zu einer Lichtaustrittsfläche geleitet wird, wo es daraufhin einen gewissen Leuchtbereich ausstrahlt. Für Fahrzeugscheinwerfer ergibt sich dabei eine, für Abblendlicht meist asymmetrisch geformte Lichtkeule.

Aufgabe der Erfindung ist es, ein Lichtleitelement zur Verfügung zu stellen, welches es erlaubt, dass eine Beleuchtungseinrichtung mit einem derartigen Lichtleitelement eine präzise ausgeprägte Hell-/Dunkelgrenze aufweist und die Blendwirkung dieser Beleuchtungseinrichtung deutlich reduziert wird.

Die Aufgabe wird durch ein Lichtleitelement mit den Merkmalen des Anspruchs 1 gelöst.

Durch die Längserstreckung des Lichtleitelements wird zunächst die hauptsächliche Richtung der Lichtausstrahlung definiert. Dabei kann jedes der übereinander angeordneten Lichtleitelemente eine Hauptachse aufweisen, welche dann im Wesentlichen parallel zueinander sind. Die übereinander angeordneten Lichtleiter können dabei beispielsweise durch Verkleben aneinander fixiert werden. Die Hauptachse des Lichtleitelements ist dann eine dazu parallele Gerade beispielsweise durch den geometrischen Mittelpunkt der Lichtaustrittsfläche. Für den Fall, dass einer oder mehrerer der Lichtleiter Kanten in Längsrichtung aufweist, ist die Hauptachse im Wesentlichen parallel zu einer oder mehrerer dieser Kanten. Die Übereinanderanordnung mehrerer derartiger Lichtleiter erhöht den Lichtstrom in Richtung der Hauptachse und verbessert dadurch die Ausleuchtung durch eine Beleuchtungseinrichtung mit einem derartigen Lichtleitelement. Die an der Lichteintrittsfläche, welche quer zur Längsrichtung angeordnet ist, eintretenden Lichtstrahlen breiten sich entweder geradlinig im Lichtleitelement aus (vor allem wenn schon die in das Lichtleitelement eintretende Strahlung gebündelt ist) oder werden mittels Totalreflexion an die ebenfalls quer zur Längsrichtung angeordnete Lichtaustrittsfläche weitergeleitet.

Wird nun ein sich in Längsrichtung erstreckender Teilbereich der Wandung der Lichtleiter mit einer Struktur versehen, ist für einen auf diese Struktur auftreffenden Lichtstrahl die geometrische Bedingung für Totalreflexion nicht mehr erfüllt und eine Weiterleitung an die Lichtaustrittsfläche wird verhindert. Je nach Ausbildung dieser Struktur wird ein Bündel von Lichtstrahlen, die in diesem Bereich auf die Wandung auftreffen, teilweise gebrochen und aus dem Lichtleiter gelenkt und zusätzlich oder alternativ diffus reflektiert, die damit ebenfalls nicht mehr aus der Lichtaustrittsfläche aus dem Lichtleitelement austreten. Zusätzlich oder alternativ ist es möglich, einen sich in Längsrichtung erstreckenden Teilbereich der Wandung zu schwärzen, d.h. mit einem Material mit einem hohen, vorzugsweise über 95% liegenden Absorptionskoeffizienten zu versehen. In diesem Bereich auftreffende Lichtstrahlen werden dann ebenfalls nicht mehr in Richtung der Lichtaustrittsfläche totalreflektiert, sondern absorbiert.

Durch die Anordnung der Struktur bzw. die Schwärzung werden somit gewisse sich im Lichtleiter schräg fortpflanzende Lichtstrahlen ausgeblendet, diffus reflektiert und absorbiert. Derartige sich schräg bezüglich der Längsrichtung fortpflanzende Lichtstrahlen würden auch aus der Lichtaustrittsfläche schräg austreten und daher eine negative Auswirkung auf die Lichtbündelung haben. Somit können durch diese Maßnahmen gewisse schräg verlaufende Strahlen eliminiert werden und die Parallelisierung bzw. Bündelung des aus dem Lichtleitelement austretenden Lichts kann signifikant verbessert werden. Die nicht mit einer Struktur versehenen Bereiche der Wandung bzw. die nicht geschwärzten Bereiche der Wandung stehen weiterhin für Totalreflexion zur Verfügung oder können auch verspiegelt ausgebildet sein. Obwohl die bevorzugt vorgesehen ist, müssen nicht alle Lichtleiter des Lichtleitelements mit einer Struktur versehene bzw. geschwärzte Teilbereiche in ihren Wandungen aufweisen.

Durch die oben erwähnte Struktur bzw. Schwärzung kann es erreicht werden, dass mindestens 95%, vorzugsweise mehr als 99% der Strahlung die auf die mit einer Struktur versehenen bzw. geschwärzten Teilbereiche der Wandung der Lichtleiter auftreffen dort absorbiert werden. Da die in diesen Teilbereichen der Wandung auftreffende Strahlung bezüglich der Längsrichtung der Lichtleiter geneigt ist, zeichnet sich die aus der Lichtaustrittfläche austretende Strahlung durch eine hohe Parallelität bzw. Bündelung aus. Insbesondere kann eine bevorzugte Richtung der austretenden Strahlung durch die Anordnung der Struktur bzw. die Schwärzung an nur einer Seite der Wandung effektiv, bis in den Bereich von Zehntel-Graden ausgeblendet werden.

Um eine spezielle Hell/Dunkelgrenze zu realisieren, beispielsweise annähernd in horizontaler Richtung bei der Verwendung eines derartigen Lichtleitelements in einem Fahrzeugscheinwerfer, kann es vorgesehen sein, ganz spezielle Teilbereiche der Wandung mit einer Struktur zu versehen und/oder zu schwärzen. Dabei kann sich diese Hell/Dunkelgrenze auf die von einer ein erfindungsgemäßes Lichtleitelement umfassende Beleuchtungseinrichtung erzeugte Leuchtdichteverteilung beziehen. Im Falle des Fahrzeugscheinwerfers können diese Teilbereiche an der Unterseite der Wandung der jeweiligen Lichtleiter sein, sodass die an der Unterseite in diesen Bereichen auftreffenden Lichtstrahlen absorbiert bzw. diffus reflektiert oder ausgeblendet werden. An der der Unterseite gegenüberliegenden Oberseite der Lichtleiter ist eine Totalreflexion dagegen möglich. Dort reflektierte Strahlen pflanzen sich nämlich nach unten fort und stören die zu realisierende im wesentlich horizontal Hell/Dunkelgrenze für einen Fahrzeugscheinwerfer nicht, wobei nur der unterhalb der Horizontalen angeordnete Bereich ausgeleuchtet sein soll, weil nur die schräg nach oben laufenden Lichtstrahlen von der Struktur bzw. der Schwärzung beeinträchtigt werden.

Eine weitere Anwendungsmöglichkeit eines derartigen Lichtleitelements, ist durch eine Beleuchtungseinrichtung für einen Innenraum oder einen Wandstrahler gegeben, wo ein selektiver Winkelbereich ausgeblendet und dafür ein scharf definierter Bereich, beispielsweise ein an einer Wand aufgehängtes Bild, ausgeleuchtet werden soll.

Weitere vorteilhafte Ausführungen der Erfindung sind in den abhängigen Ansprüchen definiert.

Durch eine Anordnung des strukturierten Bereichs über die gesamte Länge der einzelnen Lichtleiter und zusätzlich oder alternativ der geschwärzten Bereiche über im Wesentlichen die gesamte Länge der Lichtleiter wird die oben erwähnte Absorption bzw. diffuse Reflexion und Ausblendung weiter verstärkt. Dabei kann es vorgesehen sein, dass manche Bereiche geschwärzt, während andere strukturiert sind und wieder andere Bereiche der Lichtleiter können sowohl strukturiert als auch geschwärzt sein. Zur selektiven Ausbildung einer Hell/Dunkelgrenze einer Beleuchtungseinrichtung mit einem erfindungsgemäßen Lichtleitelement können Teilbereiche der Wandung verspiegelt ausgebildet sein. Vorzugsweise handelt es sich dabei um Bereiche, die den strukturierten bzw. geschwärzten Bereichen gegenüberliegend sind. Dadurch werden ebenso wie durch die Anordnung von Bereichen, an denen Totalreflexion möglich ist, Lichtstrahlen einer speziellen Richtung selektiv absorbiert oder ausgeblendet bzw. diffus reflektiert.

In einer bevorzugten Ausführungsform der Erfindung sind mindestens zwei der Lichtleiter unmittelbar in Kontakt und daher direkt aneinander angrenzend übereinander angeordnet. Es kann auch vorgesehen sein, dass dieser Kontakt mittels eines geeigneten Zwischenstücks nur mittelbar ausgebildet ist. Es kann weiters vorgesehen sein, dass jeder der Lichtleiter mittelbaren oder unmittelbaren Kontakt zu einem weiteren Lichtleiter hat. Es ist aber andererseits auch vorstellbar, dass die Lichtleiter beabstandet voneinander angeordnet sind. Dabei ist es aber vorteilhaft, wenn die Längsrichtungen der Lichtleiter im Wesentlichen parallel zueinander angeordnet sind.

In einer besonders vorteilhaften Ausführungsform der Erfindung sind die einzelnen Lichtleiter prismatisch, vorzugsweise quaderförmig ausgebildet. Dabei ist es vorgesehen, dass die größte Ausdehnung des Quaders in Längsrichtung, des Lichtleitelements angeordnet ist und der prismatische, vorzugsweise rechteckigförmige Querschnitt senkrecht zur Längsrichtung angeordnet ist, wobei im Falle eines Rechtecks die übereinander angeordneten Lichtleiter jeweils an der längeren Seite des Rechtecks aneinander angrenzen. Generell sind allerdings beliebige Querschnittsformen möglich, wobei es vorteilhaft ist, eine Querschnittsausdehnung viel geringer als eine andere Querschnittsausdehnung auszuführen.

In einer vorteilhaften Ausführungsform der Erfindung ist vorgesehen, dass die prismatischen Lichtleiter mit strukturierten und/oder geschwärzten Bereichen an einer Längsseite des Prismas versehen sind. Besonders vorteilhaft kann es dabei sein, dass es sich jeweils um die Unterseite der Wandung der aneinander grenzenden einzelnen Lichtleiter handelt, sodass Lichtstrahlen hauptsächlich nur mehr geradlinig oder an der Oberseite nach unten reflektiert werden, wodurch die Vorzugsrichtung des aus der Lichtaustrittsfläche austretenden Lichts geradlinig oder nach unten orientiert ist.

Für die Art der in einem sich in Längsrichtung erstreckenden Teilbereich der Wandung angeordneten Struktur gibt es natürlich auch vielfältige Möglichkeiten. Beispielsweise ist es in einer Ausführungsform der Erfindung vorgesehen, die Struktur derart auszuführen, sodass diese im Querschnitt ein Sägezahnprofil aufweist. Dabei sind dann je nach einfallendem Strahl an den im Vergleich zur restlichen Wandung schrägen Bereiche der Zahnflanken der Sägezahnstruktur die geometrischen Bedingungen für Totalreflexion nicht mehr erfüllt, sodass Teile des Strahls gebrochen und senkrecht durch die Wandung abgelenkt und damit ausgeblendet werden. An den relativ zur Wandung im Wesentlichen senkrechten Flanken werden Strahlen geblockt und damit auch aus dem Strahlenbündel ausgeblendet. Dabei weisen die Zahnflanken des Sägezahnprofils eine Zahnneigung zwischen 3 und 45°, vorzugsweise zwischen 3 und 10° auf. Diese Neigung wird dabei gegenüber der Längsrichtung gemessen.

In einer weiteren Ausführungsform der Erfindung weist die Struktur in ihrem Querschnitt gekrümmte Profile auf. Dabei können beispielsweise die geneigten Bereiche einer Sägezahnstruktur konkav gekrümmt sein, um die Erfüllung der geometrischen Bedingung für Totalreflexion der dort auftreffenden Lichtstrahlen zu erschweren. Aber auch anders gekrümmte oder nach einer mathematischen Funktion geformte Querschnitte der Wandstruktur sind möglich und denkbar. Vorzugsweise handelt es sich dabei um eine regelmäßig wiederholte geometrische Form.

Obwohl schon - wie oben erwähnt - durch eine Veränderung der geometrischen Verhältnisse der Wandung und zusätzlich oder alternativ durch eine einfache Erhöhung des Absorptionskoeffizienten der Wandung die Bündelung bzw. Parallelisierung des aus dem Lichtleitelement austretenden Lichts wesentlich verbessert werden kann, ist dahingehend eine weitere Verbesserung möglich, wenn die Absorption bzw. diffuse Reflexion an den strukturierten bzw. geschwärzten Bereichen weiter erhöht wird. Zu diesem Zweck ist es in einer vorteilhaften Ausführungsform der Erfindung vorgesehen, auf die Struktur oder andere Bereiche der Wandung eine Mikrostruktur anzuordnen, beispielsweise indem diese Bereiche diffus mattiert werden, wobei die Rautiefe dieser Mattierung zwischen 0,01 µm und 20 µm, vorzugsweise etwa 0,4 µm beträgt. Eine derartige diffuse Mattierung hat aufgrund ihrer Mikrostruktur den Effekt, dass an den mit der Mattierung versehenen Bereichen auftreffende Lichtstrahlen verstärkt absorbiert bzw. diffus reflektiert wird und somit ein schräger Strahlenverlauf verhindert wird, was sich wiederum in erhöhter Parallelität bzw. Bündelung der aus der Lichtaustrittsfläche austretenden Strahlung bemerkbar macht.

In einer weiteren Ausführungsform der Erfindung ist es vorgesehen, an den Bereichen mit bereits vorhandener Struktur und/oder Schwärzung oder auch an weiteren Bereichen der Wandung eine Nanostruktur mit einer Rautiefe zwischen 5 nm und 400 nm anzuordnen. Eine derartige Nanostruktur ist beispielsweise durch gezieltes Aufdampfen von als Störstellen für die Lichtreflexion dienenden Teilchen herstellbar. Durch die oben erwähnte Mikrostruktur und diese Nanostruktur ist die damit versehene Oberfläche der Wandung stark verästelt und wenig glatt, sodass dort bei den meisten der eintreffenden Strahlen die Bedingung für Totalreflexion nicht mehr erfüllt ist und zudem parallel auftreffende und in knappem Abstand voneinander reflektierte Strahlen gänzlich andere Richtungen aufweisen, also diffus reflektiert werden. Schräg auf die Wandung in diesem Bereich auftreffende Strahlen werden also absorbiert oder derart diffus reflektiert, dass nur mehr ein geringer Teil dieser Strahlung an der Lichtaustrittsfläche aus dem Lichtleitelement austritt.

In einer Ausführungsform der Erfindung ist die Strukturierung und/oder die Schwärzung von Teilbereichen der Wandung der Lichtleiter durch mehrere übereinander angeordnete dünne Schichten, die auch unter dem Begriff "thin-films" im Stand der Technik bekannt sind, ausgebildet. An den Bereichen der Wandung wird somit ein Multilayer-thin-film angeordnet. Die dünnen Schichten sind dabei insgesamt möglichst lichtundurchlässig, das heißt, Licht welches durch die beispielsweise aus Glas bestehenden Lichtleiter an der Wandung nach außen tritt, soll zu einem möglichst hohen Anteil absorbiert werden. Das Erscheinungsbild dieser mehreren übereinander angeordneten dünnen Schichten ist daher schwarz, sodass die mehreren dünnen Schichten die erfindungsgemäße Schwärzung der Lichtleiter ausbilden. Aufgrund der sehr kleinen Dicke der dünnen Schichten ist auch eine Strukturierung der Wandung gegeben, die bei entsprechender Dicke auch zu einer Nanostruktur zu zählen ist.

Bei der übereinander erfolgenden Anordnung der dünnen Schichten sind bevorzugt mindestens zwei Absorptionsschichten und mindestens zwei Interferenzschichten vorgesehen, wobei die Absorptionsschichten für Licht des sichtbaren Spektrums zumindest teilweise absorbierend sind und die Interferenzschichten für Licht des sichtbaren Spektrums im Wesentlichen durchlässig und nur wenig absorbierend sind. Dabei folgt in alternierender Weise auf eine Absorptionsschicht eine Interferenzschicht, wobei an der Außenseite der mehreren dünnen Schichten, das heißt an jener Seite, die von der Wandung des Lichtleiters abgewandt ist, eine deckende, abschließende Metallschicht vorgesehen sein kann. Durch diese alternierende Anordnung von Absorptions- und Interferenzschichten ist es - bei geeigneter Wahl der Schichtdicke - möglich, mittels Absorption und destruktiver Interferenz eine möglichst hohe Schwärzung, das heißt einen möglichst hohen Absorptionsgrad zu erreichen.

Die Verfahren zu Herstellung derartiger dünnen Schichten sind im Stand der Technik unter dem Schlagwort "Dünnschichttechnologie" bekannt. Beispiele derartiger Herstellungsverfahren sind PVD-Verfahren (physical vapour deposition - Verfahren) wie zum Beispiel Sputtern oder thermisches Verdampfen im Vakuum. Je nach gewünschtem Reflexions- bzw. Absorptionsgrad kann es vorgesehen sein, insgesamt zwischen drei und sieben, vorzugsweise fünf, derartige dünne Schichten übereinander anzuordnen.

Als Absorptionsschichten kommen beispielsweise Metallschichten wie zum Beispiel Chromschichten in Frage, während sich Schichten aus Metalloxid, wie beispielsweise SiO₂ für die Interferenzschichten eignen. Die Schichtdicken werden dabei so gewählt, dass zum Zwecke der destruktiven Interferenz der Reflexionsgrad für den für die Erfindung wesentlichen sichtbaren Spektralbereich möglichst gering ist. Bei senkrecht einfallendem Licht betragen die Reflexionswerte beispielsweise zwischen 1 und 5 %. Bevorzugt betragen die Dicken der Absorptionsschichten zwischen 2 nm und 15 nm, während die Dicken der Interferenzschichten zwischen 30 nm und 100 nm betragen. Die lichtundurchlässige abschließende Metallschicht kann eine Dicke von mehr als 100 nm aufweisen. Es ist dabei möglich, dass die Schichtdicken je nach zu beschichtender geometrischer Form der Lichtleiter angepasst werden. Beispielsweise kann es vorgesehen sein, dass bei der Beschichtung einer schrägen Fläche ein um 15 % höhere Schichtdicke angeordnet wird, um die gewünschten Interferenzbedingungen zu erzeugen.

In einer weiteren Ausführungsform der Erfindung ist die Struktur der Teilbereiche der Wandung der Lichtleiter durch eine Mehrzahl optischer Gitter ausgebildet. Die optischen Gitter bestehen dabei aus jeweils einer Mehrzahl von Gitterpunkten (Dots) die speziell berechnete Profile aufweisen und Licht in spezielle Richtungen umlenken. Die optischen Gitter dienen daher als Oberflächenstrukturierungen zur Lichtlenkung. Dabei wird durch eine gezielte räumliche Kombination dieser Gitterpunkte sowie deren Größe und Form das Licht in eine gewünschte Richtung umgelenkt, wobei die Lichtführung an die jeweiligen lokalen geometrischen und auch spektralen Bedingungen der Lichtleiter angepasst ist.

Die sich in Längsrichtung erstreckenden Teilbereichen der Wandung angeordnete Struktur stellt eine Störung der ansonsten plan verlaufenden Wandung dar. Dabei ist in einer Ausführungsform der Erfindung vorgesehen, dass die Tiefe dieser Störung, d.h. das Ausmaß der Struktur in im Wesentlichen senkrechter Richtung zur Wandung ein Verhälntnis zur kleinsten Querschnittsausdehnung des jeweiligen Lichtleiters von weniger als 1 zu 25, vorzugsweise weniger als 1:50, aufweist, wobei eine gegebenenfalls zusätzlich angeordnete Mikrostruktur, beispielsweise in Form einer Beschichtung mittels einer diffusen Mattierung, ein diesbezügliches Verhältnis von weniger als 1 zu 500 aufweist und eine gegebenenfalls zusätzlich angeordnete Nanostruktur von weniger als 1:5000. Im Falle eines rechteckigen Querschnitts ist die kleinste Querschnittsausdehnung dabei die Höhe der Lichtleiter, welche in jener Richtung angeordnet ist, in welcher die einzelnen Lichtleiter übereinander angeordnet werden.

Für ein erfindungsgemäßes Lichtleitelement kann es besonders vorteilhaft sein, dass es über eine ausgeprägt längliche Struktur verfügt. In einer Ausführungsform der Erfindung ist das Verhältnis der kleinsten Querschnittsausdehnung der Lichtleiter zur Länge des jeweiligen Lichtleiters kleiner als 1 zu 25, vorzugsweise kleiner als 1 zu 60. Ein Beispiel eines derartigen Lichtleiters weist eine Länge von 58 mm und eine kleinste Querschnittsausdehnung von 1,1 mm auf, sodass das Verhältnis der kleinsten Querschnittsausdehnung des Lichtleiters zur Länge des Lichtleiters 1 zu 52,7 beträgt.

In einer weiteren Ausführungsform der Erfindung ist vorgesehen, dass die quer zur Längsrichtung angeordnete Lichtaustrittsfläche, welche durch ein Ende der jeweiligen Lichtleiter gebildet wird, nicht aus einer bündigen Übereinanderanordnung der Lichtleiter besteht. Stattdessen ist vorgesehen, dass die Lichtleiter bei der Austrittsfläche des Lichtleitelements stufenförmig angeordnet sind. Dabei kann vorgesehen sein, dass die Länge der Lichtleiter von einer Stufe zur nächsten zunimmt, wobei die Lichtleiter an der Lichteintrittsfläche bündig übereinander angeordnet sind. Dabei kann vorgesehen sein, dass die Länge der Lichtleiter in jene Richtung zunimmt, in der schräg verlaufende Strahlen aus dem Strahlenbündel ausgeblendet werden sollen.

In einer konkreten Einbausituation eines erfindungsgemäßen Lichtleitelements in eine Beleuchtungseinrichtung, wo schräg nach oben verlaufende Strahlen ausgeblendet werden sollen, kann es besonders vorteilhaft sein, dass der längste Lichtleiter dabei an der oberen Seite des Lichtleitelements angeordnet ist und die Länge der Lichtleiter dann in Stufen zu den unteren Lichtleitern hin abnimmt, wobei die Stufen an der Lichtaustrittsfläche angeordnet sind. Eine derartige stufenförmige Anordnung hat den Vorteil, dass Strahlen, die bei einem kürzeren Lichtleiter aus der Lichtaustrittsfläche austreten und schräg nach oben verlaufen, von darüber angeordneten längeren Lichtleitern reflektiert oder absorbiert werden können. Dadurch wird die Parallelisierung bzw. Bündelung des austretenden Lichts weiter verbessert, weil Strahlen, die in Richtung der Zunahme der Stufen verlaufen, von längeren Stufen geblockt und damit ausgeblendet werden. Dabei erweist es sich als besonders vorteilhaft, wenn die mit einer Struktur versehenen Bereich der Wandung bzw. die geschwärzten Bereiche der Wandung immer an jener Seite der Lichtleiter angeordnet ist, an der ein jeweils kürzerer Lichtleiter angrenzt.

In einer weiteren Ausführungsform der Erfindung ist vorgesehen, dass die Lichtaustrittsfläche und/oder die Lichteintrittsfläche über optisch behandelte Bereiche verfügt. Dabei kann die Lichtaustrittsfläche und/oder Lichteintrittsfläche der übereinander angeordneten und vorzugsweise durch Verkleben aneinander fixierten Lichtleiter plan poliert sein. Die Lichtaustrittsfläche und Lichteintrittsfläche können dabei so plan geschliffen und/oder poliert werden, dass die Lichtaustrittsfläche und Lichteintrittsfläche nicht senkrecht auf die Hauptachse des Lichtleitelements angeordnet sind, sondern in für ein spezifisches Ausblendverhalten notwendige Winkel relativ zur Hauptachse, dh die Lichteintrittsfläche und/oder die Lichtaustrittsfläche sind bezüglich einer zur Hauptachse senkrechten Ebene geneigt. Zusätzlich oder alternativ kann noch mindestens einer der Lichtleiter bezüglich einer Hauptachse geneigt sein.

Es kann aber auch vorgesehen sein, dass die Lichteintrittsfläche und zusätzlich oder alternativ die Lichtaustrittsfläche die Funktion einer Linse erfüllt, indem die Lichtaustrittsfläche und/oder die Lichteintrittsfläche einen, beispielsweise asphärischen, Linsenschliff erhält. Dies kann nützlich sein, um den austretenden Lichtstrom zu erhöhen sowie die Bündelung bzw. Parallelisierung der eintretenden Lichtstrahlen zu verbessern.

Die Erfindung betrifft weiters eine Beleuchtungseinrichtung, insbesondere für ein Kraftfahrzeug mit einer oder mehreren Lichtquellen und einem wie oben angeführten Lichtleitelement, wobei das von den Lichtquellen emittierte Licht, vorzugsweise nachdem es durch zusätzliche Vorrichtungen bereits gerichtet, also gebündelt wurde, in die Lichteintrittsfläche des Lichtleitelements eintritt, dort weiter gebündelt bzw. parallelisiert wird und als möglichst scharf definiertes Strahlenbündel, dh mit einer ausgeprägten Hell-/Dunkelgrenze, welche über entsprechende Leuchtdichtewerte definiert werden kann, aus der Lichtaustrittsfläche des Lichtleitelements austritt.

Dabei kann es vorgesehen sein, dass eine Lichtquelle allen oder zumindest mehreren der Lichtleiter zugeordnet ist. Es kann aber auch vorgesehen sein, dass jedem Lichtleiter eine eigene Lichtquelle zugeordnet ist, und somit eine Mehrzahl von Lichtquellen das in die Lichteintrittsfläche eintretende Licht abstrahlen. Die Lichtquellen selbst können Leuchtdioden, die sich durch Sparsamkeit und Energieeffizienz auszeichnen, Halogenleuchten, oder aber andere konventionelle Lichtquellen mit kohärenter oder inkohärenter Strahlung im sichtbaren Spektralbereich sein.

In einer besonders bevorzugten Ausführungsform der Erfindung umfasst die Lichtquelle einen Reflektor, welcher seinerseits wiederum in einer Ausführungsform einen Kalottenspiegel umfasst. Im Allgemeinen emittiert eine Lichtquelle auch in der vom Lichtleitelement abgewandten Richtung Licht. Durch einen derartigen Reflektor, welcher zusätzlich einen Kalottenspiegel aufweisen kann, wird es ermöglicht, auch die in dieser Richtung emittierte Strahlung zum Lichtleitelement umzulenken und zusätzlich dazu für eine Parallelisierung der eintretenden Strahlung zu sorgen. Mit weiteren Umlenkspiegeln und/oder Reflektoren kann dabei auch die in einer Richtung senkrecht zur Lichteintrittsfläche von der Lichtquelle emittierte Strahlung ebenfalls in Richtung Hauptachse umgelenkt werden.

In einer weiteren Ausführungsform der Erfindung ist vorgesehen, dass zwischen Lichtquelle und Lichteintrittsfläche des Lichtleitelements ein Linsensystem, also eine Anordnung einer oder mehrerer Linsen angeordnet ist. Diese Linsen haben die Aufgabe, die in das Lichtleitelement eintretende Strahlung bereits möglichst parallel zu machen und außerdem gewisse Abbildungsfehler zu vermeiden. Zu diesem Zweck kann es vorteilhaft sein, dass das Linsensystem einen Achromat umfasst.

Für eine erfindungsgemäße Beleuchtungseinrichtung kann es besonders wünschenswert sein, dass die Hell/Dunkelgrenze in einem gewissen Winkelbereich einstellbar oder variierbar ist. Dies trifft für eine Wandbeleuchtung zu, wo beispielsweise je nach Wanddekor die Hell/Dunkelgrenze variiert werden möchte, aber auch bei der Verwendung einer erfindungsgemäßen Beleuchtungseinrichtung als Schweinwerfer für ein Fahrzeug. Hierbei sollte das Maximum der Leuchtdichte bzw auch das Maximum der Beleuchtungsstärke nicht genau in der Horizontalen liegen, sondern in einem Winkelbereich von etwa 0,1° bis 2° unterhalb der Horizontalen. Aus diesem Grund ist in einer bevorzugten Ausführungsform der Erfindung das Lichtleitelement um eine Achse drehbar und in einer verdrehten Position fixierbar. Dabei steht diese Achse vorzugsweise auf die Hauptachse und eine dazu senkrechte Vertikalachse senkrecht. Durch eine derartige Verdrehung des Lichtleitelements ist es möglich, einen bei horizontaler Ausrichtung des Lichtleitelements geradlinig durch das Lichtleitelement verlaufenden Strahls auszublenden und stattdessen Strahlen, die in Richtung von knapp unterhalb der Horizontalen verlaufen, möglichst ungestört passieren zu lassen. Des Weiteren kann es vorteilhaft sein, dass diese Verdrehung des Lichtleitelements variabel ist. Dies ist besonders dann wünschenswert, wenn sich durch Beladung des Kraftfahrzeugs die horizontale Ausrichtung des Scheinwerfers verändert und bei starker Zuladung das Maximum der Leuchtdichte bzw. Beleuchtungsstärke des ausgestrahlten Lichtes weiter nach unten gedreht werden muss.

Weitere Einzelheiten und Vorteile der vorliegenden Erfindung werden anhand der Figurenbeschreibung unter Bezugnahme auf die Zeichnungen im Folgenden näher erläutert. Darin zeigt bzw. zeigen:
- Fig. 1a bis c: einen Querschnitt einer Beleuchtungseinrichtung mit einem erfindungsgemäßen Lichtleitelement sowie zwei perspektivische Darstellungen verschiedener Ausführungsformen eines erfindungsgemäßen Lichtleitelements,
- Fig. 2a und b: einen Querschnitt einer weiteren Ausführungsform einer erfindungsgemäßen Beleuchtungseinrichtung und eine perspektivische Ansicht des dazugehörigen Lichtleitelements,
- Fig. 3a und b: einen Querschnitt einer weiteren Ausführungsform einer erfindungsgemäßen Beleuchtungseinrichtung und eine perspektivische Ansicht des dazugehörigen Lichtleitelements,
- Fig. 4a und b: einen Querschnitt einer weiteren Ausführungsform einer erfindungsgemäßen Beleuchtungseinrichtung und eine perspektivische Ansicht des dazugehörigen Lichtleitelements,
- Fig. 5a und b: einen Querschnitt in vertikaler Richtung sowie einen Querschnitt in horizontaler Richtung zur Darstellung des Funktionsprinzips einer Ausführungsform einer erfindungsgemäßen Beleuchtungseinrichtung,
- Fig. 6: einen Querschnitt in Vertikalrichtung zur Darstellung des Funktionsprinzips einer weiteren Ausführungsform einer erfindungsgemäßen Beleuchtungseinrichtung,
- Fig. 7: einen Querschnitt in Vertikalrichtung zur Darstellung des Funktionsprinzips einer weiteren Ausführungsform einer erfindungsgemäßen Beleuchtungseinrichtung,
- Fig. 8a bis c: einen Querschnitt durch drei Ausführungsformen von Lichtleitern eines erfindungsgemäßen Lichtleitelements,
- Fig. 9a und b: zwei Detailansichten des Querschnitts von zwei Ausführungsformen von Lichtleitern des erfindungsgemäßen Lichtleitelements, und
- Fig. 10: eine Darstellung des Strahlengangs wichtiger Strahlen durch einen Lichtleiter eines erfindungsgemäßen Lichtleitelements zur Illustrierung des Funktionsprinzips.

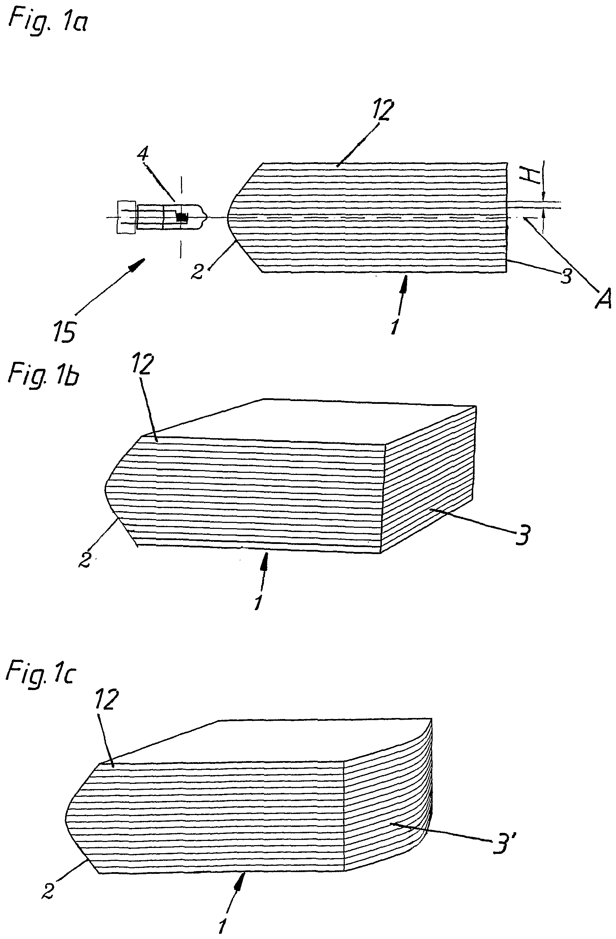

Fig. 1a zeigt einen Querschnitt durch eine erfindungsgemäße Beleuchtungseinrichtung 15 mit einem Lichtleitelement 1 und einer zugeordneten Lichtquelle 4, wobei die Schnittebene senkrecht auf Oberfläche des Lichtleitelements 1 durch die übereinander angeordneten Lichtleiter 12, aus denen das Lichtleitelement 1 besteht, gelegt wurde. Das Lichtleitelement 1 ist aus den Lichtleitern 12 in Form einer Lamelle zusammengefügt. Die einzelnen Lichtleiter 12 weisen dabei eine, im Wesentlichen jeweils gleiche, Höhe H auf. Das Lichtleitelement 1 ist in Richtung der Hauptachse A, welche im geometrischen Zentrum, in diesem Fall dem Flächenschwerpunkt, der plan polierten Austrittsfläche 3 angeordnet ist und parallel zu den Längskanten der Lichtleiter 12 verläuft. Bis auf den Ort der asphärisch geschliffenen Eintrittsfläche 2 weisen die Lichtleiter 12 rechteckigen Querschnitt auf. Die Eintrittsfläche 2 weist einen asphärischen Schliff auf, damit durch diesen eine Linsenfunktion erfüllt werden kann, indem eintretende Lichtstrahlen gebündelt werden. In Fig. 1b ist eine perspektivische Darstellung des Lichtleitelements 1 mit den einzelnen übereinander angeordneten Lichtleitern 12 dargestellt. Fig. 1c zeigt eine andere Ausführungsform des Lichtleitelements 1 in perspektivischer Darstellung. In dieser ist auch die Austrittsfläche 3' asphärisch geschliffen.

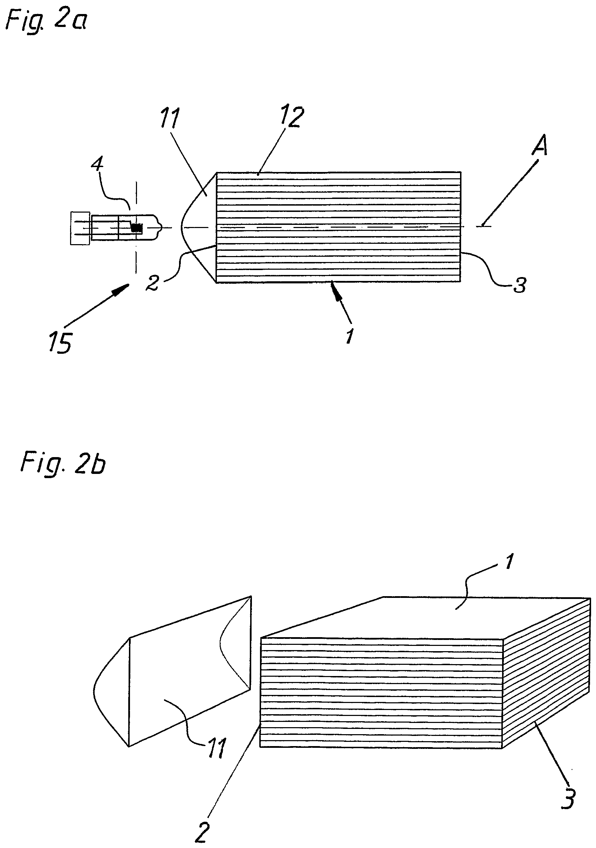

Eine weitere Ausführungsform des erfindungsgemäßen Lichtleitelementes 1 in einer Beleuchtungseinrichtung 15 mit einer Lichtquelle 4 ist in einer Querschnittsdarstellung in Fig. 2a gezeigt, wobei die Schnittebene wie in Fig. 1a gewählt wurde. Das Lichtleitelement 1 ist quaderförmig und besteht aus jeweils gleich großen Lichtleitern 12, die übereinander angeordnet sind. Im geometrischen Zentrum der plan polierten Austrittsfläche 3 befindet sich die in Längsrichtung des Lichtleitelements 1 orientierte, also parallel zu den Längskanten der Lichtleiter 12 verlaufende, Hauptachse A. In diesem Ausführungsbeispiel ist auch die Lichteintrittsfläche 2 plan poliert, sodass auch die Lichtleiter 12 selbst quaderförmig sind. Statt die Lichteintrittsfläche 2 asphärisch zu schleifen, ist unmittelbar an die Lichteintrittsfläche 2 ein Linsensystem 11, in diesem Fall bestehend aus einer Linse, angeordnet. Dieses Linsensystem 11 hat die Aufgabe, von der Lichtquelle 4 ausgehende Strahlen möglichst parallel zur Hauptachse A in das Lichtleitelement 1 einzuführen. In Fig. 2b ist eine perspektivische Ansicht des Lichtleitelementes 1 aus Fig. 2a und des Linsensystems 11 zu sehen.

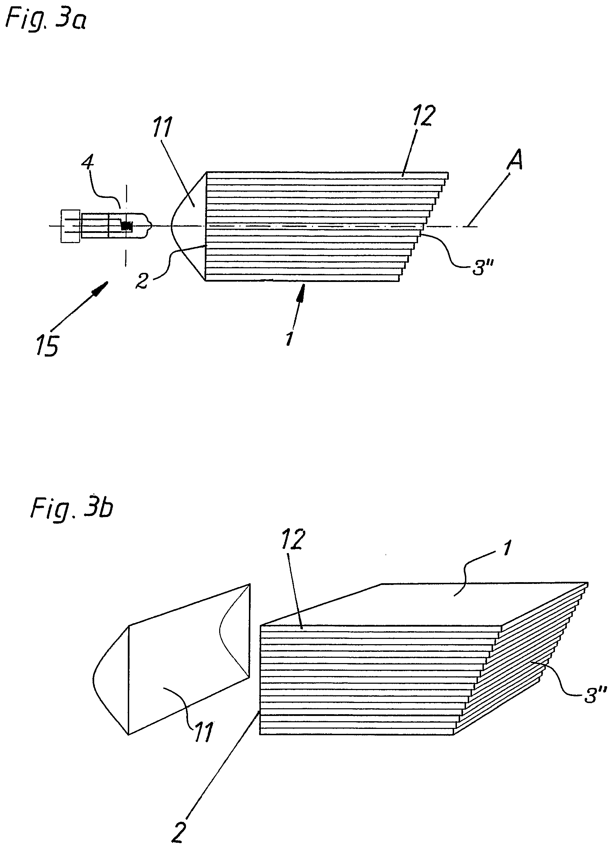

Eine wiederum andere Ausführungsform der Erfindung ist in Fig. 3a gezeigt. Zur Parallelisierung bzw. Bündelung des einzukoppelnden Lichtes von der Lichtquelle ist wiederum vor der plan polierten Lichteintrittsfläche 2 des Lichtleitelementes 1 ein Linsensystem 11 angeordnet. In diesem Ausführungsbeispiel ist allerdings die in Richtung der Hauptachse A gemessene Länge der einzelnen Lichtleiter 12 verschieden, sodass die Lichtleiter 12 an der Lichtaustrittfläche 3" stufenförmig angeordnet sind, wobei die Länge der Lichtleiter 12 von unten nach oben zunehmend ist. Die Hauptachse A ist im Schnittpunkt der zwei Symmetrieachsen der Lichtaustrittsfläche 3" angeordnet. Dies sorgt dafür, dass schräg nach oben aus der Lichtaustrittsfläche 3" austretende Strahlen zumindest teilweise von längeren, darüber angeordneten Lichtleitern 12 geblockt und aus dem Strahlenbündel ausgeblendet werden können. Wiederum zeigt Fig. 3b dieses Ausführungsbeispiel des erfindungsgemäßen Lichtleitelementes 1 sowie des Linsensystems 11 in perspektivischer Darstellung. Die einzelnen Lichtleiter 12 sind wiederum quaderförmig ausgebildet.

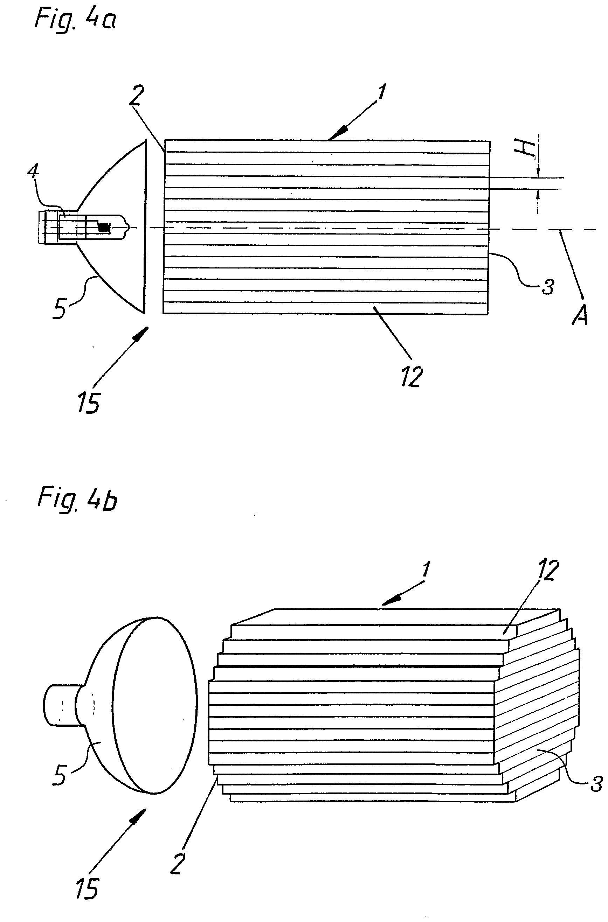

Ein weiteres Ausführungsbeispiel einer erfindungsgemäßen Beleuchtungseinrichtung 15 ist in Fig. 4a dargestellt. Das Lichtleitelement 1 besteht aus übereinander angeordneten quaderförmigen Lichtleitern 12 und einer plan polierten Lichteintrittsfläche 2 sowie einer plan polierten Lichtaustrittsfläche 3. Die Höhe H der einzelnen Lichtleiter 12 ist im Wesentlichen für alle Lichtleiter 12 gleich groß. Der Lichtquelle 4 ist ein Reflektor 5 zugeordnet, der über eine reflektive beschichtete Innenseite verfügen kann. Diese erfüllt eine ähnliche Aufgabe wie das in den obigen Figuren erwähnte Linsensystem 11. Von der Lichtquelle 4 ausgehende und stark von der Richtung der Hauptachse A abweichende Lichtstrahlen werden durch den Reflektor zumindest teilweise parallelisiert. In Fig. 4b ist eine perspektivische Ansicht des Reflektors 5 und des Lichtleitelementes 1 zu sehen. Dabei ist zu erkennen, dass die Breite der einzelnen Lichtleiter 12 nicht für alle Lichtleiter 12 gleich groß ist, sondern von einem kleinsten Wert oben und unten zu einem größten Wert im Bereich der Mittellage des Lichtleitelementes 1 zunimmt.

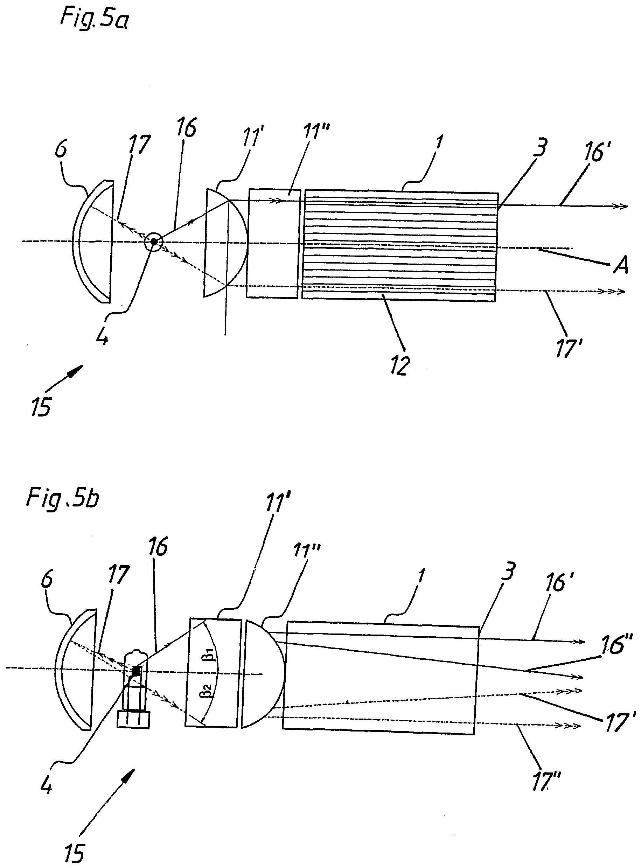

Figur 5a zeigt einen Querschnitt durch eine Ausführungsform der Beleuchtungseinrichtung 15, wobei die Schnittebene wie in den vorangehenden Figuren senkrecht auf die Lichtleiter 12 und durch die Hauptachse A gelegt ist. Das Linsensystem 11 besteht aus zwei Linsen 11' und 11". Der Reflektor 5 umfasst einen Kalottenspiegel 6 in Form einer Kugelkalotte, dessen Größe, innerer Kugelradius und Position im Verhältnis zum Leuchtmittel so bemessen ist, dass ein maximaler Lichtstrom wiederum auf das Linsensystem 11 reflektiert wird, wobei hier nur der Kalottenspiegel 6 selbst dargestellt ist. Das quaderförmige Lichtleitelement 1 besteht aus übereinander angeordneten, im Wesentlichen gleich großen Lichtleitern 12 und bildet dadurch eine Art Lamellenpaket. Wie aus der Figur 5a ersichtlich ist, dient sowohl der Kalottenspiegel 6 als auch das Linsensystem 11 zur Parallelisierung bzw.

Bündelung in Richtung der Hauptachse A der austretenden Lichtstrahlen. Von der Lichtquelle 4 in Richtung der Lichteintrittsfläche 2, aber schräg zur Hauptachse A orientierte, emittierte Lichtstrahlen 16 werden vom Linsensystem 11 in Richtung der Hauptachse A umgelenkt. Die Projektion des austretenden Lichtstrahl 16' in die Schhittebene steht daher zumindest im Wesentlichen senkrecht auf die Lichtaustrittsfläche 3. Lichtstrahlen, die von der Lichtquelle 4 in von der Lichteintrittsfläche 2 abgewandte Richtungen emittiert werden, werden vom Kalottenspiegel 6 reflektiert und dann ebenso in das Lichtleitelement 1 eingekoppelt, und treten nach Durchgang desselben in Richtung der Hauptachse A ebenfalls derart aus, dass die Projektion des austretenden Lichtstrahls 17' in die Schnittebene zumindest im Wesentlichen senkrecht auf die Lichtaustrittsfläche 3 steht. Je nach Dimensionierung des Lichtleitelements 1 können beispielsweise die austretenden Lichtstrahlen 16' und 17' nur in einem Winkel von beispielsweise -2° bis 2°, vorzugsweise -2° bis 0° bezüglich der Senkrechten auf die Lichtaustrittsfläche 3 aus dieser austreten. Es kann aber auch vorgesehen sein, dass durch das Lichtleitelement 1 nur ein Teil des austretenden Strahlenbündels ausgeblendet wird, und im Wesentlichen nur Strahlen deren Projektion in die Schnittebene annähernd senkrecht auf die Lichtaustrittfläche 3 oder nach unten gerichtet ist aus dem Lichtleitelement 1 austreten.

Dieses Ausführungsbeispiel der Beleuchtungseinrichtung 15 ist in einer weiteren Schnittdarstellung in Fig. 5b gezeigt, wobei die Schnittebene in dieser Figur senkrecht auf die Schnittebene der Fig. 5a gelegt ist. Wie ersichtlich ist, ist der maximale Einkoppelungswinkel durch β₁ + β₂ gegeben. Wiederum werden von der Lichtquelle 4 in Richtung der Lichteintrittsfläche 3 emittierte Strahlen 16 vom Linsensystem 11, bestehend aus zwei Linsen 11' und 11" parallelisiert. In andere Richtungen emittierte Strahlen 17 werden nach Reflexion am Kalottenspiegel 6 ebenfalls parallelisiert. Wie anhand der austretenden Lichtstrahlen 16', 16" sowie 17', 17" ersichtlich ist, ist die Bündelung der austretenden Lichtstrahlen in dieser Schnittebene nicht so ausgeprägt wie in der Schnittebene der Fig. 5a. So können die Projektionen der austretenden Lichtstrahlen 16', 16" sowie 17', 17" in die Schnittebene der Fig. 5b beispielsweise um bis zu 5° von der Senkrechten auf die Lichtaustrittsfläche 3 abweichen. Aufgrund der geringeren Abweichung in der Richtung, wie sie in Fig. 5a gezeigt ist, ergibt sich, dass für dieses Ausführungsbeispiel eine sinnvolle Hell/Dunkelgrenze durch eine Ebene senkrecht zur Schnittebene von Fig. 5a und parallel zur Schnittebene von Fig. 5b gebildet wird.

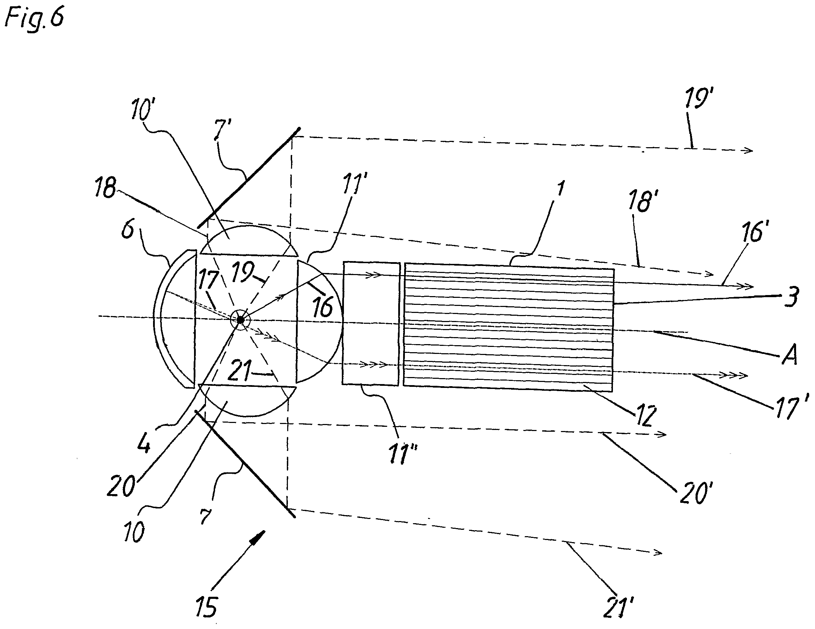

Eine Querschnittsdarstellung durch eine weitere Ausführungsform der erfindungsgemäßen Beleuchtungseinrichtung 15 ist in Fig. 6 gezeigt, wobei die Schnittebene senkrecht auf das quaderförmige Lichtleitelement 1, wie in Fig. 5a gelegt wurde und die Hauptachse A wiederum in dieser Schnittebene angeordnet ist. Die Hauptachse A ist dabei ebenfalls wieder im geometrischen Zentrum der Lichtaustrittsfläche 3 angeordnet. Das Linsensystem 11 besteht aus zwei Linsen 11' und 11", wodurch Lichtstrahlen 16, die von der Lichtquelle 4 in Richtung der Lichteintrittsfläche 2 emittiert werden, schon vor dem Eintritt in das Lichtleitelement 1 in Richtung der Hauptachse A abgelenkt und damit gebündelt werden. Das gleiche gilt für in andere Richtungen emittierte Strahlen 17, nachdem sie vom Kalottenspiegel 6 reflektiert wurden. Das Lichtleitelement 1 parallelisiert bzw. bündelt dann die hindurchgehenden Strahlen erfindungsgemäß weiter, sodass die austretenden Strahlen 16' bzw. 17' oder zumindest deren Projektionen in die Schnittebene eine geringe Abweichung von beispielsweise 0 bis -2° bezüglich der Senkrechten auf die Lichtaustrittsfläche 3, also auf eine Parallele der Hauptachse A aufweisen. Zusätzlich verfügt die Beleuchtungseinrichtung 15 über weitere Linsen 10 und 10' und zugehörige untere bzw. obere Umlenkspiegel 7 bzw. 7', wodurch von der Lichtquelle 4 austretende Strahlen, welche nicht vom Kalottenspiegel 6 bzw. der Linse 11' erfasst werden, ebenfalls in Richtung der Hauptachse A zur Erzielung einer im jeweiligen Anwendungsfall gewünschten Gesamtlichtverteilung abgelenkt werden, wobei diese Strahlen 18', 19', 20' und 21' oder zumindest deren Projektionen in die Schnittebene beispielsweise eine Abweichung im Ausmaß von 0 bis -5° bezüglich einer Parallelen der Hauptachse A aufweisen können. Dadurch kann eine ausgeprägte Hell/Dunkelgrenze durch eine parallel zu dieser Ebene liegende Ebene mit einem höheren Leuchtengesamtwirkungsgrad realisiert werden.

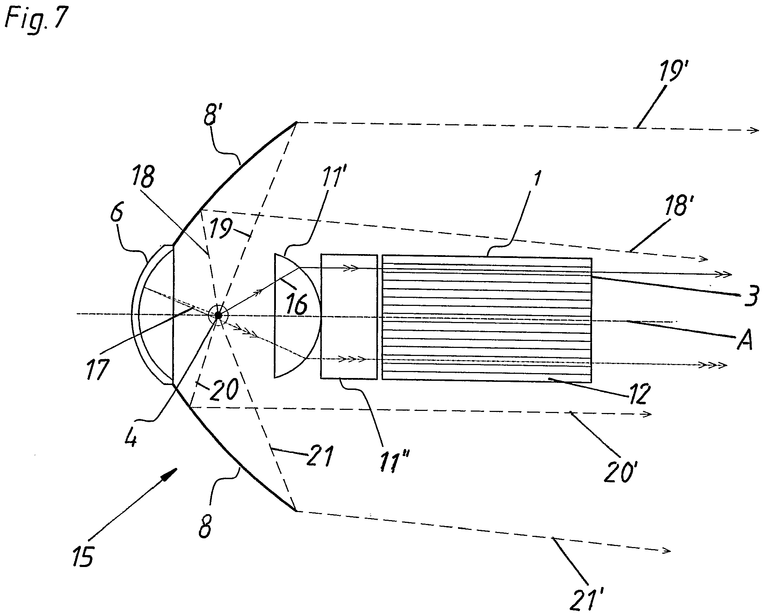

Eine weitere Ausführungsform einer erfindungsgemäßen Beleuchtungseinrichtung 15 ist wiederum in einer Schnittdarstellung mit einer wie oben gewählten Schnittebene in Fig. 7 dargestellt. Hierbei umfasst der der Lichtquelle 4 zugeordnete Reflektor 5 neben dem Kalottenspiegel 6 weiters einen unteren sowie oberen Reflektor 8 bzw. 8'. Durch diese Anordnung kann auch ohne die Linsen 10 bzw. 10' ein ähnlicher Strahlengang und damit eine ähnliche Hell/Dunkelgrenze wie in Fig. 6 realisiert werden.

Wie weiter oben erwähnt, wird durch das Linsensystem 11 bereits ein Strahlenbündel, welches durch die Lichteintrittsfläche 2 in das Lichtleitelement 1 eintritt, erzeugt. Eine Aufgabe des Lichtleitelementes 1 ist es nun, dieses enge Strahlenbündel weiter zu beschneiden, also weiter zu bündeln, indem ein der Hauptteil des Strahlenbündels geradlinig und ungehindert durch das Lichtleitelement 1 verlaufen kann und ein Teil der Strahlen über Reflexion, beispielsweise durch Totalreflexion, zur Lichtaustrittsfläche 3 geleitet wird, während ein Teil der Strahlen absorbiert oder diffus reflektiert und aus dem Strahlenbündel ausgeblendet wird.

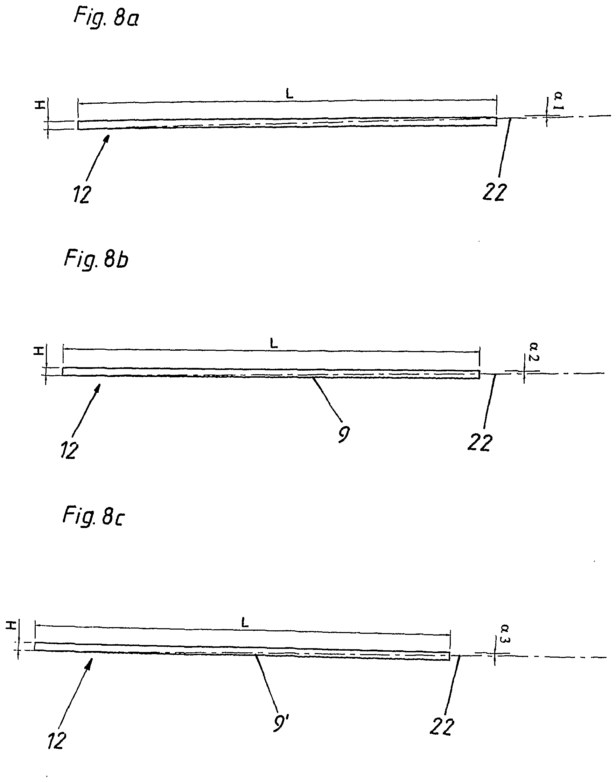

In Fig. 8a bis c ist in einem Querschnitt ein einzelner Lichtleiter 12 des Lichtleitelements 1 dargestellt. Der wirksame Strahlungswinkel α₁, also jener Winkel bezüglich der Längsrichtung des Lichtleiters 12, ist gegeben durch jenen Strahl 22, der schräg, aber geradlinig und ohne Kontakt zur Wandung, mit Ausnahme der Lichteinkoppel- und Lichtaustrittsfläche des Lichtleiters 12, verläuft. Somit ist der wirksame Strahlungswinkel durch das Verhältnis von Länge L zu Höhe H des Lichtleiters gegeben. In diesem Ausführungsbeispiel beträgt dieses Verhältnis L zu H 80 : 1, wodurch α₁ ungefähr 0,7° beträgt. In den in Fig. 8a bis c dargestellten Lichtleitern ist die Wandung im Bereich der Unterseite der Längsrichtung des Lichtleiters mit einer Struktur versehen bzw. geschwärzt, sodass α₁ der maximale Winkel ist, den ein Strahl bezüglich der Längsrichtung des Lichtleiters 12 nach oben aufweisen kann. Eine Ebene, parallel zur Längsrichtung und senkrecht zur dargestellten Schnittebene, stellt daher eine Hell/Dunkelgrenze einer erfindungsgemäßen Beleuchtungseinrichtung 15 dar. Während in Fig. 8a die Unterseite der Wandung noch keinen Unterschied zur Oberseite der Wandung des Lichtleiters 12 aufweist, ist in Fig. 8b die Unterseite der Wandung des Lichtleiters 12 mit einer Struktur 9 versehen, wobei der Querschnitt dieser Struktur ein Sägezahnprofil mit einer Zahnneigung von 3° aufweist. Dadurch wird der ansonsten gleich wie in Fig. 8a eintretende Strahl 22 in Richtung der Unterseite der Wandung des Lichtleiters 12 abgelenkt, sodass der Winkel α₂ der Neigung des Strahls 22 nach oben kleiner als der Winkel α₁ ist. Durch eine Veränderung der Struktur wie in Fig. 8c, wo die Struktur 9' zusätzlich diffus mattiert ist, also mit einer Mikrostruktur versehen ist, wird der Neigungswinkel nach oben α₃ des austretenden Strahls 22 weiter verringert, wodurch die Hell/Dunkelgrenze weiter verschärft und präziser definiert wird.

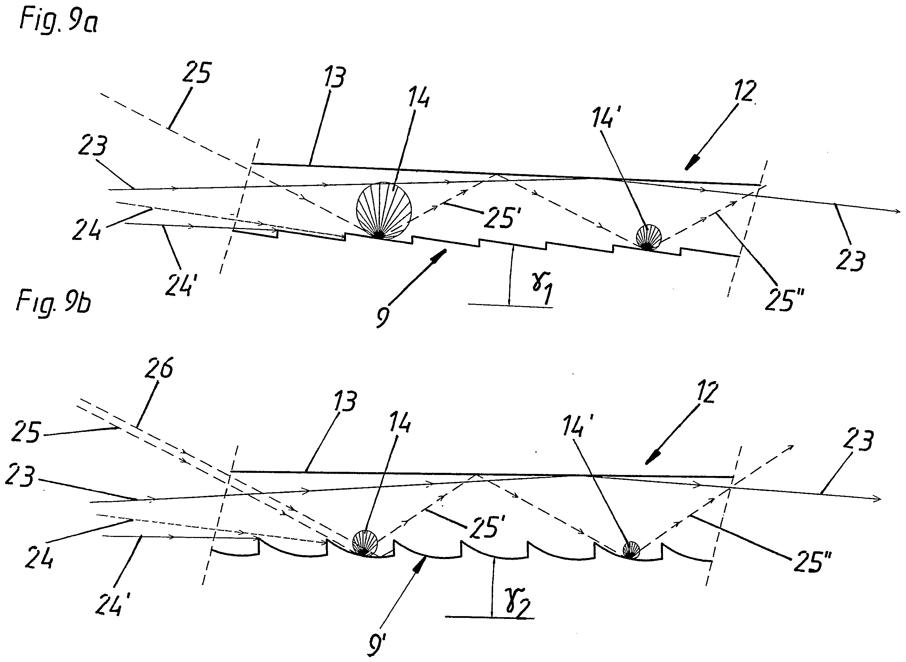

Die Funktionsweise des Lichtleitelementes 1 ist in den Detailansichten einer Querschnittdarstellung von Lichtleitern 12 in Fig. 9a und 9b gezeigt. In Fig. 9a ist der Lichtleiter 12 an seiner Unterseite der Wandung mit einer Struktur 9 versehen, die in diesem Fall im Querschnitt ein Sägezahnprofil mit einer Zahnneigung γ₁ aufweist. An der Oberseite 13 der Wandung gibt es keine derartige Struktur, sodass ein dort auftreffender Strahl 23 über Totalreflexion weitergeleitet werden kann. Es kann auch vorgesehen sein diesen Bereich der Wandung verspiegelt auszuführen. Andere eintretende Strahlen 24 und 24', welche an und für sich die geometrische Bedingungen für Totalreflexion bei einer plan verlaufenden Wandung erfüllen würden, werden durch die senkrechten Kanten des Sägezahnprofils der Struktur 9 geblockt. Der Strahl 25 trifft auf der geneigten Seite des Sägezahnprofils der Struktur 9 auf. In diesem Ausführungsbeispiel ist die Struktur 9 diffus mattiert, wodurch nur ein gewisser Teil 25' des Strahls 25 totalreflektiert wird, während ein großer Teil 14 des Strahls 25 diffus reflektiert wird und damit nicht mehr an der Lichtaustrittsfläche 3 aus dem Lichtleitelement 1 austreten kann. An der Oberseite 13 der Wandung wird der Strahl 25' totalreflektiert, während beim nächsten Auftreffen auf die Struktur 9 wieder nur ein geringer Teil 25" totalreflektiert wird, während ein Großteil 14' des Strahls 25' wiederum diffus reflektiert wird. Dadurch wird es ermöglicht, dass Strahlen, welche bezüglich der Oberseite 13 der Wandung, also bezüglich der Längrichtung des Lichtleiters 12 nach oben geneigt sind, effektiv aus dem Strahlenbündel absorbiert werden. In Fig. 9b ist ein Ausführungsbeispiel eines Lichtleiters 12 mit einer anders ausgebildeten Struktur 9' gezeigt, wobei in diesem Fall die Zahnflanken nicht plan sondern gekrümmt sind. Dadurch ist für auf diese Zahnflanken auftreffende Strahlen 25 die geometrische Bedingung für Totalreflexion nicht überall erfüllt, sodass ein Teil des Strahls gebrochen und senkrecht zur Wandung abgelenkt wird, während ein geringer Teil 25' reflektiert wird. Wiederum ist die Struktur 9' diffus mattiert, sodass ein Großteil 14 des Strahls 25 durch diffuse Reflexion abgelenkt wird. Nach einer Totalreflexion des Strahls 25' an der Oberseite 13 der Wandung, wobei die Oberseite 13 der Wandung auch verspiegelt ausgeführt sein kann, wird beim nächsten Auftreffen auf die Struktur 9' wiederum nur ein Teil 25" reflektiert und ein Großteil 14' diffus reflektiert. Weitere Strahlen 26 werden nach einer Reflexion an den Zahnflanken durch die senkrechten Flanken geblockt.

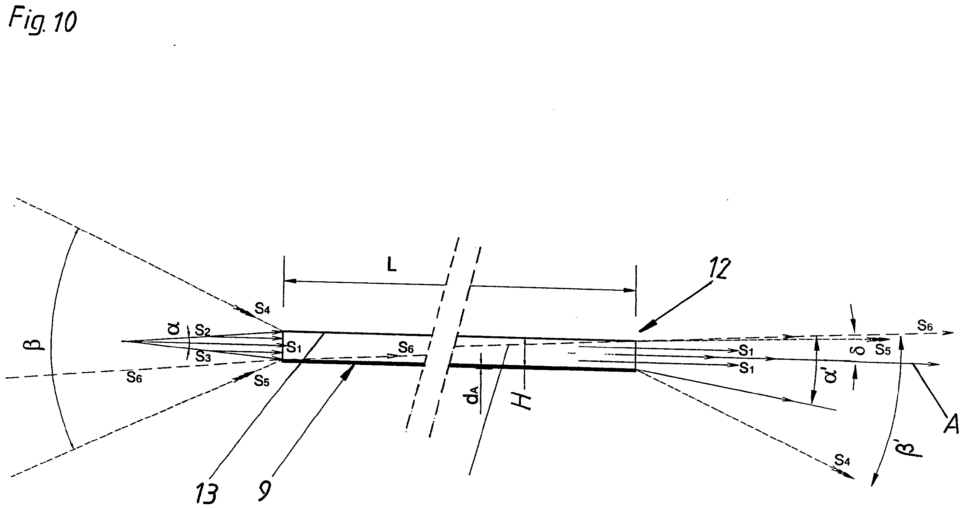

Zur weiteren Verdeutlichung der Wirkungsweise eines erfindungsgemäßen Lichtleitelementes 1 anhand eines der übereinander angeordneten Lichtleiter 12 sind in Fig. 10 weitere Strahlengänge wichtiger Strahlen dargestellt. Dabei ist der Lichtleiter 12 nicht in seiner ganzen Länge L sondern unterbrochen dargestellt. Die Unterseite der Wandung ist im Gegensatz zur Oberseite 13 der Wandung mit einer Struktur 9 und einer Beschichtung versehen, wobei die Tiefe d_{A} der Struktur, also das Ausmaß der Struktur senkrecht zur Längsrichtung, dabei viel kleiner als die Höhe H ist. Beispielsweise ist das Verhältnis d_{A} zu H kleiner als 1 : 25 und das der Dicke der Beschichtung zu H kleiner als 1:500. Ziel des lamellenförmigen Lichtleitelementes 1 ist es, Strahlen die bezüglich der Richtung der Strahlen S1, also bezüglich der Hauptachse A, nach oben geneigt sind effektiv aus dem austretenden Strahlenbündel auszublenden und dadurch zu einer Parallelisierung und Bündelung des austretenden Strahlenbündels zu führen. Der energetische Hauptteil des eintretenden Strahlenbündels liegt in einem Winkelbereich a, welcher von den Strahlen S2 und S3 gegeben wird. Alle weiteren noch erfassten Strahlen liegen in einem Winkelbereich β, welcher von den Strahlen S4 und S5 gegeben ist und bilden zwar einen geringeren energetischen Anteil, sind aber hinsichtlich Ihres Austrittswinkels störend und werden durch die Struktur 9 an der Unterseite der Wandung des Lichtleiters 12 effektiv absorbiert oder zumindest parallelisiert. Der Strahl S6 definiert den Grenzstrahl, welcher gerade noch durch den Lichtleiter 12 ohne Kontakt mit der Oberseite 13 bzw. Unterseite der Wandung verläuft. Durch diesen Grenzstrahl S6 wird der Winkel δ definiert, welcher den maximalen Neigungswinkel nach oben, welches das austretende Strahlenbündel einnehmen kann, ergibt. Der energetische Hauptteil des austretenden Strahlenbündels liegt dabei in einem Winkel a', während das gesamte austretende Strahlenbündel in einem Winkelbereich β' liegt.

Es versteht sich von selbst, dass sich die Erfindung nicht auf die gezeigten Beispiele beschränkt sondern alle technischen Äquivalente umfasst, welche in die Reichweite der nachfolgenden Ansprüche fallen können.

Auch sind die in der Beschreibung gewählten Lageangaben, wie z.B. oben, unten, usw. auf die unmittelbar beschriebene, sowie dargestellte Figur bezogen und sind bei einer Lageänderung sinngemäß auf die neue Lage zu übertragen.

Des Weiteren ist die erfindungsgemäße Beleuchtungseinrichtung nicht auf die gezeigten Beispiele wie Scheinwerfer beschränkt sondern, sondern umfasst alle möglichen denkbaren Anwendungsbereiche wie Straßenbeleuchtungen, Tunnelbeleuchtungen, Innen- und Außenbeleuchtungen für Gebäude und Einrichtungen jeglicher Art wie zB Wandbeleuchtungen oder Sportplatzbeleuchtungen, usw.

## Patentansprüche

1. Lichtleitelement für eine Beleuchtungseinrichtung, wobei das Lichtleitelement (1) in Richtung einer Hauptachse (A) langgestreckt ist und eine sich quer zur Längsrichtung erstreckende Lichteintrittsfläche (2) und eine quer zur Längsrichtung abstrahlende Lichtaustrittsfläche (3) aufweist, und zwei oder mehr übereinander angeordnete Lichtleiter (12) aufweist, **dadurch gekennzeichnet, dass** ein sich in Längsrichtung erstreckender Teilbereich der Unterseite der Wandung der einzelnen Lichtleiter (12) strukturiert und/oder geschwärzt ist, wobei der strukturierte Teilbereich der Wandung zumindest abschnittsweise zusätzlich diffus mattiert und/oder mit einer Nanostruktur versehen ist, und wobei der geschwärzte Teilbereich der Wandung zumindest abschnittweise zusätzlich mit einer Nanostruktur versehen ist,
wobei sich in den Lichtleitern (12) ausbreitende Lichtstrahlen von den strukturierten und/oder geschwärzten Teilbereichen diffus reflektierbar bzw. absorbierbar sind.

2. Lichtleitelement nach Anspruch 1, **dadurch gekennzeichnet, dass** sich die strukturierten und/oder geschwärzten Bereiche im Wesentlichen über die gesamte Länge (L) der einzelnen Lichtleiter (12) erstrecken.

3. Lichtleitelement nach Anspruch 1 oder 2, **dadurch gekennzeichnet, dass** mindestens zwei der übereinander angeordneten Lichtleiter (12) mittelbar oder unmittelbar miteinander in Kontakt stehen.

4. Lichtleitelement nach einem der Ansprüche 1 bis 3 **dadurch gekennzeichnet, dass** ein sich in Längsrichtung erstreckender, vorzugsweise den strukturierten und/oder geschwärzten Bereiche gegenüberliegender Teilbereich der Wandung der einzelnen Lichtleiter (12) verspiegelt ausgebildet ist.

5. Lichtleitelement nach einem der Ansprüche 1 bis 4, **dadurch gekennzeichnet, dass** die Lichtleiter (12) im sichtbaren Spektralbereich des Lichts im Wesentlichen transparente Vollkörper, vorzugsweise Glaskörper sind.

6. Lichtleitelement nach einem der Ansprüche 1 bis 5, **dadurch gekennzeichnet, dass** das Lichtleitelement mehr als 10, vorzugsweise mehr als 20, übereinander angeordnete Lichtleiter (12) aufweist.

7. Lichtleitelement nach einem der Ansprüche 1 bis 6, **dadurch gekennzeichnet, dass** die strukturierten Bereiche der Wandung der Lichtleiter (12) im Querschnitt eine Sägezahnprofil aufweisen und/oder über gekrümmte Profile verfügen.

8. Lichtleitelement nach einem der Ansprüche 1 bis 7, **dadurch gekennzeichnet, dass** die strukturierten Bereiche der Wandung im Querschnitt eine regelmäßige geometrische Form aufweisen.

9. Lichtleitelement nach einem der Ansprüche 1 bis 8, **dadurch gekennzeichnet, dass** die strukturierten Teilbereiche der Lichtleiter (12) eine Rautiefe zwischen 0,01 µm und 20 µm, vorzugsweise etwa 0,4 µm aufweisen und/oder die Nanostruktur mit einer Rautiefe zwischen 5 nm und 400 nm versehen ist.

10. Lichtleitelement nach einem der Ansprüche 1 bis 9, **dadurch gekennzeichnet, dass** die Strukturierung und/oder die Schwärzung der Wandung durch mehrere übereinander angeordnete dünne Schichten (thin- films) ausgebildet ist.

11. Lichtleitelement nach Anspruch 10, **dadurch gekennzeichnet, dass** die mehreren übereinander angeordneten dünnen Schichten mindestens zwei Interferenzschichten und mindestens zwei Absorptionsschichten umfassen, wobei die Interferenzschichten und die Absorptionsschichten vorzugsweise alternierend angeordnet sind und wobei die Absorptionsschichten für Licht des sichtbaren Spektrums zumindest teilweise absorbierend sind und vorzugswiese im Wesentlichen aus Metall bestehen und die Interferenzschichten für Licht des sichtbaren Spektrums im Wesentlichen durchlässig sind und vorzugsweise im Wesentlichen aus Metalloxiden bestehen.

12. Lichtleitelement nach einem der Ansprüche 1 bis 11, **dadurch gekennzeichnet, dass** das Verhältnis der Tiefe (d_{A}) der Struktur (9, 9') zur kleinsten Querschnittsausdehnung (H) der Lichtleiter (12) kleiner als 1 : 25, vorzugsweise kleiner als 1 : 50, ist.

13. Lichtleitelement nach einem der Ansprüche 1 bis 11, **dadurch gekennzeichnet, dass** das Verhältnis der kleinsten Querschnittsausdehnung (H) der Lichtleiter (12) zur Länge (L) der Lichtleiter (12) kleiner als 1 : 25, vorzugsweise kleiner als 1 : 60, ist.

14. Beleuchtungseinrichtung, insbesondere für einen Fahrzeugscheinwerfer mit einer oder mehreren Lichtquellen (4) und einem Lichtleitelement (1), nach einem der Ansprüche 1 bis 13.

15. Beleuchtungseinrichtung nach Anspruch 14, **dadurch gekennzeichnet, dass** der oder den Lichtquelle(n) (4) ein Reflektor (5), vorzugsweise mit einem Kalottenspiegel (6), zugeordnet ist und/oder dass zwischen der Lichtquelle (4) und der Lichteintrittsfläche (2), vorzugsweise unmittelbar an die Lichteintrittsfläche (2) angrenzend, ein Linsensystem (11), vorzugsweise ein Achromat, angeordnet ist.

16. Beleuchtungseinrichtung nach Anspruch 14 oder 15, **dadurch gekennzeichnet, dass** das Lichtleitelement (1) um eine, vorzugsweise um eine auf die Hauptachse (A) und eine dazu senkrechte Vertikalachse senkrechte, Achse drehbar und in einer verdrehten Position fixierbar ist.

## Claims

1. Light guide element for an illumination device, wherein the light guide element (1) is elongated in the direction of a main axis (A) and comprises a light coupling surface (2) extending transversely to the longitudinal direction and a light emission surface (3) radiating transversely to the longitudinal direction, and has two or more light guides (12), arranged one above the other, **characterized in that** a subsection, extending in the longitudinal direction, of the underside of the wall of the individual light guides (12) is structured and/or blackened, wherein the structured subsection of the wall is additionally at least sectionwise diffusely rendered matt and/or provided with a nanostructure, and wherein the blackened subsection of the wall is additionally provided at least sectionwise with a nanostructure, wherein light beams propagating in the light guides (12) are diffusely reflectable or absorbable by the structured and/or blackened subsections.

2. Light guide element according to Claim 1, **characterized in that** the structured and/or blackened sections extend substantially over the entire length (L) of the individual light guides (12).

3. Light guide element according to Claim 1 or 2, **characterized in that** at least two of the light guides (12), which are arranged one above the other, are indirectly or directly in contact with one another.

4. Light guide element according to one of Claims 1 to 3, **characterized in that** a subsection of the wall of the individual light guides (12) that extends in the longitudinal direction and is located preferably opposite the structured and/or blackened subsections has a mirrored configuration.

5. Light guide element according to one of Claims 1 to 4, **characterized in that** the light guides (12) in the visible spectral range of the light are substantially transparent solid bodies, preferably glass bodies.

6. Light guide element according to one of Claims 1 to 5, **characterized in that** the light guide element has more than 10, preferably more than 20, light guides (12) which are arranged one above the other.

7. Light guide element according to one of Claims 1 to 6, **characterized in that** the structured subsections of the wall of the light guides (12) have in cross section a sawtooth profile and/or have curved profiles.

8. Light guide element according to one of Claims 1 to 7, **characterized in that** the structured subsections of the wall in cross section have a regular geometric shape.

9. Light guide element according to one of Claims 1 to 8, **characterized in that** the structured subsections of the light guides (12) have a roughness depth between 0.01 µm and 20 µm, preferably approximately 0.4 µm and/or the nanostructure is provided with a roughness depth between 5 nm and 400 nm.

10. Light guide element according to one of Claims 1 to 9, **characterized in that** the structuring and/or the blackening of the wall is embodied by a plurality of thin films arranged one above the other.

11. Light guide element according to Claim 10, **characterized in that** the plurality of thin films which are arranged one above the other comprise at least two interference layers and at least two absorption layers, wherein the interference layers and the absorption layers are preferably arranged in alternation and wherein the absorption layers are at least partially absorbing for light of the visible spectrum and preferably substantially consist of metal, and the interference layers are substantially transmissive for light of the visible spectrum and preferably substantially consist of metal oxides.

12. Light guide element according to one of Claims 1 to 11, **characterized in that** the ratio of the depth (d_{A}) of the structure (9, 9') to the smallest cross-sectional extent (H) of the light guides (12) is less than 1:25, preferably less than 1:50.

13. Light guide element according to one of Claims 1 to 11, **characterized in that** the ratio of the smallest cross-sectional extent (H) of the light guides (12) to the length (L) of the light guides (12) is less than 1:25, preferably less than 1:60.

14. Illumination device, in particular for a vehicle headlight, having one or more light sources (4) and a light guide element (1) according to one of Claims 1 to 13.

15. Illumination device according to Claim 14, **characterized in that** a reflector (5), preferably with a spherical cap mirror (6), is assigned to the light source(s) (4) and/or **in that** a lens system (11), preferably an achromat, is arranged between the light source (4) and the light coupling surface (2), preferably directly adjacent to the light coupling surface (2).

16. Illumination device according to Claim 14 or 15, **characterized in that** the light guide element (1) is rotatable about an axis, preferably an axis that is perpendicular to the main axis (A) and to a vertical axis that is perpendicular thereto, and is fixable in a rotated position.

## Revendications

1. Élément de guidage de lumière pour un dispositif d'éclairage, dans lequel l'élément de guidage de lumière (1) est allongé dans la direction d'un axe principal (A) et comporte une surface d'injection de lumière (2) s'étendant transversalement à la direction longitudinale et une surface de sortie de lumière (3) émettant un rayonnement transversalement à la direction longitudinale, et au moins deux guides de lumière (12) disposés l'un sur l'autre,
**caractérisé en ce qu'**une zone partielle s'étendant longitudinalement de la surface inférieure de la paroi des guides de lumière (12) individuels est structurée et/ou noircie, dans lequel la zone partielle structurée de la paroi est en outre dépolie de manière diffuse et/ou pourvue d'une nanostructure au moins par sections, et dans lequel la zone partielle noircie de la paroi est en outre pourvue au moins par sections d'une nanostructure, dans lequel des faisceaux lumineux se propageant dans les guides de lumière (12) peuvent être réfléchis ou absorbés de manière diffuse par les zones partielles structurées et/ou noircies.

2. Élément de guidage de lumière selon la revendication 1, **caractérisé en ce que** les zones structurées et/ou noircies s'étendent sensiblement sur toute la longueur (L) des différents guides de lumière (12) .

3. Élément de guidage de lumière selon la revendication 1 ou 2, **caractérisé en ce qu'**au moins deux des guides de lumière (12) disposés les uns sur les autres sont en contact direct ou indirect les uns avec les autres.

4. Élément de guidage de lumière selon l'une des revendications 1 à 3, **caractérisé en ce qu'**une zone partielle s'étendant longitudinalement de la paroi des différents guides de lumière (12), de préférence opposée aux zones structurées et/ou noircies, est pourvue d'un revêtement réfléchissant.

5. Élément de guidage de lumière selon l'une des revendications 1 à 4, **caractérisé en ce que** les guides de lumière (12) sont des corps pleins sensiblement transparents dans le domaine spectral visible de la lumière, de préférence des corps en verre.

6. Élément de guidage de lumière selon l'une des revendications 1 à 5, **caractérisé en ce que** l'élément de guidage de lumière comporte plus de 10, de préférence plus de 20, guides de lumière (12) disposés les uns sur les autres.

7. Élément de guidage de lumière selon l'une des revendications 1 à 6, **caractérisé en ce que** les zones structurées de la paroi du guide de lumière (12) présentent en section transversale un profil en dents de scie et/ou des profils incurvés.

8. Élément de guidage de lumière selon l'une des revendications 1 à 7, **caractérisé en ce que** les zones structurées de la paroi présentent en section transversale une forme géométrique régulière.

9. Élément de guidage de lumière selon l'une des revendications 1 à 8, **caractérisé en ce que** les zones partielles structurées des guides de lumière (12) présentent une profondeur de rugosité comprise entre 0,01 µm et 20 µm, de préférence d'environ 0,4 µm et/ou la nanostructure présente une profondeur de rugosité comprise entre 5 nm et 400 nm.

10. Élément de guidage de lumière selon l'une des revendications 1 à 9, **caractérisé en ce que** la structuration et/ou le noircissement de la paroi est formé par une pluralité de couches minces (thin films) disposées les unes sur les autres.

11. Élément de guidage de lumière selon la revendication 10, **caractérisé en ce que** la pluralité de couches minces disposées les unes sur les autres comprennent au moins deux couches d'interférence et au moins deux couches d'absorption, dans lequel les couches d'interférence et les couches d'absorption sont de préférence disposées en alternance et dans lequel les couches d'absorption pour la lumière visible du spectre sont au moins partiellement absorbantes et sont de préférence constituées essentiellement de métal et les couches d'interférence pour la lumière visible du spectre sont essentiellement transparentes et sont de préférence constituées essentiellement d'oxydes de métal.

12. Élément de guidage de lumière selon l'une des revendications 1 à 11, **caractérisé en ce que** le rapport de la profondeur (d_{A}) de la structure (9, 9') à la plus petite section transversale (H) des guides de lumière (12) est inférieur à 1:25, de préférence inférieur à 1:50.

13. Élément de guidage de lumière selon l'une des revendications 1 à 11, **caractérisé en ce que** le rapport de la plus petite extension de la section transversale (H) des guides de lumière (12) à la longueur (L) des guides de lumière (12) est inférieur à 1:25, de préférence inférieur à 1:60.

14. Dispositif d'éclairage, notamment pour un projecteur de véhicule comportant une ou plusieurs sources lumineuses (4) et un élément de guidage de la lumière (1) selon l'une des revendications 1 à 13.

15. Dispositif d'éclairage selon la revendication 14, **caractérisé en ce qu'**un réflecteur (5), comportant de préférence un miroir en dôme (6), est associé à la ou aux source(s) lumineuse(s) (4) et/ou **en ce qu'**un système optique (11), de préférence une lentille achromatique, est disposé entre la source lumineuse (4) et la surface d'injection de lumière (2), de préférence de manière directement adjacente à la surface d'injection de lumière (2) .

16. Dispositif d'éclairage selon la revendication 14 ou 15, **caractérisé en ce que** l'élément de guidage de lumière (1) peut tourner autour d'un axe, de préférence autour d'un axe vertical perpendiculaire à l'axe principal (A) et d'un axe vertical perpendiculaire à celui-ci, et peut être fixé en position tournée.
